# EUROPEAN PATENT SPECIFICATION

(11) **EP 2 485 055 B1**
(45) Date of publication and mention of the grant of the patent: **24.06.2020**
(21) Application number: 10820058.5
(22) Date of filing: 23.08.2010
(51) Int. Cl.: G01N 35/02, G01N 35/00

(54) **SPECIMEN PREPROCESSING SYSTEM**
PROBENVORVERARBEITUNGSSYSTEM
SYSTÈME DE PRÉTRAITEMENT D'ÉCHANTILLONS

(30) Priority: 30.09.2009 JP 2009225917
(43) Date of publication of application: 08.08.2012
(73) Proprietor: Hitachi High-Tech Corporation, Minato-ku Tokyo 105-6409 (JP)
(72) Inventor: SUZUKI, Atsushi, Hitachinaka-shi Ibaraki 312-8504 (JP); YANO, Shigeru, Hitachinaka-shi Ibaraki 312-8504 (JP); FUKUGAKI, Tatsuya, Hitachinaka-shi Ibaraki 312-8504 (JP)
(74) Representative: Strehl Schübel-Hopf & Partner
(86) International application number: PCT/JP2010/005158
(87) International publication number: WO 2011/039932

(56) References cited:
- JP-A- 4 127 063
- JP-A- 5 142 232
- JP-A- 11 304 806
- JP-A- H11 281 652
- JP-A- 2000 084 436
- JP-A- 2002 040 034
- JP-A- 2002 090 374
- JP-A- 2007 040 880
- JP-U- H0 592 729
- JP-U- H0 651 870
- US-B1- 6 455 002

## Description

### Technical Field

The present invention relates generally to sample preprocessing systems that automatically preprocess blood, urine, and other biological samples prior to analysis, and more particularly, to a sample preprocessing system equipped with a centrifuge unit for centrifuging samples.

### Background Art

Sample preprocessing systems are designed so that when supplied with blood, urine, or other biological samples previously taken from patients, the system automatically conducts centrifuging, decapping, dispensing, sorting, conveying, and other processes, upon the samples.

A scheme of carrying samples in such a sample preprocessing system commonly uses either carriers each loaded with a plurality of samples, or carriers each loaded with one sample container.

In the carrying scheme that uses carriers each loaded with a plurality of samples, the samples are loaded into the sample preprocessing system by means of the carriers. In this scheme, shapes of the sample containers on the same carrier, and the kinds of samples used have needed to be unified, which in turn has required processing with an apparatus represented by those described in Patent Document 1 or 2, as well as an operator's manual intervention.

On the other hand, in the carrying scheme that uses carriers each loaded with one sample container, upon samples being loaded in a tray-rested condition into the sample preprocessing system, the samples are each transferred from the tray to a carrier in fixed order automatically. This has eliminated the need to unify the shapes of the sample containers and the kinds of samples, because of the carrier being loaded with one sample only.

In the above scheme, however, a succession of samples different in the type of processing required may reach various processing units. If a group consisting of a plurality of samples includes samples different in the type of processing required, this does not enable collective, simultaneous processing of the samples, even by a unit capable of processing samples collectively as a group. A need arises, therefore, to subgroup the samples and repeat processing a plurality of times.

As a result, the sample preprocessing system decreases in throughput that is more or less affected by a manner of arranging the samples on the trays supplied.

### Prior Art Literature

### Patent Documents

Patent Document 1: JP-5-142232-A
Patent Document 2: JP-2007-40880-A
Patent Document 3: JP-11-304806-A discloses a sample preprocessing system with a centrifuge in which sample racks are carried into a centrifugal buffer. The system has a mode for prioritising the treatment of urgent sample racks.

### Summary of the Invention

### Problems to be Solved by the Invention

Provided is a sample preprocessing system of a carrier conveying scheme, neither requiring an operator's manual intervention nor suffering a decrease in throughput due to a manner of arranging samples on trays supplied. Means for Solving the Problems

The invention solving the above object is defined by the appended claims.

Of a plurality of processing units included in the sample preprocessing system, a centrifuge unit positioned at an upstream process site to process a plurality of samples in a collective manner includes control means that changes transfer order for feeding out centrifuged samples from order for transferring the samples into the centrifuge unit. This change of the transfer order prevents a decrease in throughput of the processing units positioned at downstream process sites.

### Effects of the Invention

The present invention has a beneficial effect in that it prevents the decrease in the throughput of the sample preprocessing system without requiring an apparatus represented by those described in Patent Document 1 or 2, as well as an operator's manual intervention.

The present invention has another beneficial effect in that it prevents a decrease in throughput of analyzers connected via connection lines.

### Brief Description of the Drawings

Fig. 1 is an exemplary screen menu format for specifying a method of changing carrier-loading order;
Fig. 2 is a schematic diagram showing a sample preprocessing system and analyzers connected thereto;
Fig. 3 is a diagram for assistance in explaining a centrifuge unit;
Fig. 4 shows an example of creating information on the samples mounted on adapters; and
Fig. 5 shows a process flow for determining the carrier-loading order.

### Best Mode for Carrying Out the Invention

Hereunder, the present invention will be described in detail using an embodiment.

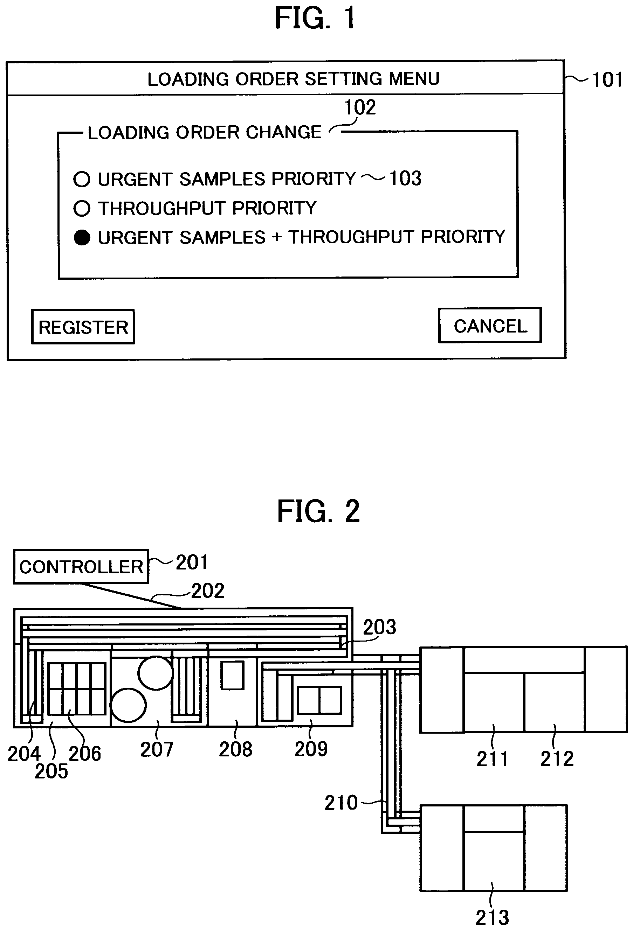

Fig. 2 is a schematic diagram that shows a sample preprocessing system according to the embodiment of the present invention, and analyzers connected to the system. A tray 206 is loaded with samples and then mounted in a loading unit 205. The loading unit 205 transfers the samples from the tray 206 to carriers supplied from a carrier supply unit 204. After the samples have been transferred to the carriers, ID reading means reads the sample identification codes assigned to the samples, and carrier identification codes assigned to the carriers. In addition, which carrier is loaded with which sample is registered in a controller 201. The controller 201 uses the registered information to transport each carrier and control samples processing.

The carrier loaded with samples is carried from the loading unit 205 to a centrifuge unit 207 using a conveyance line 203.

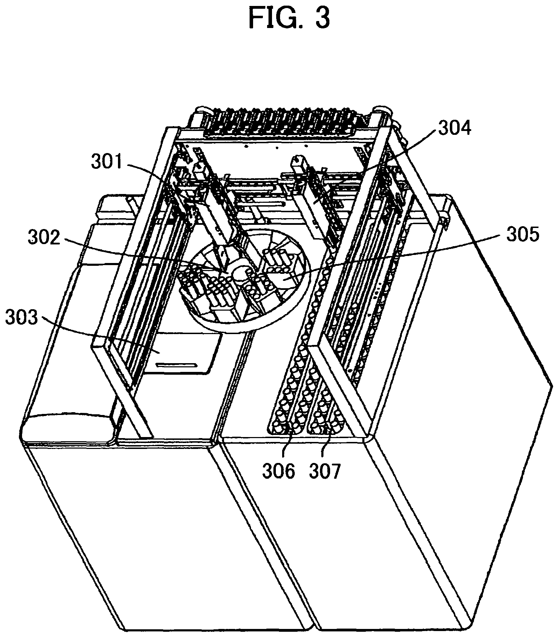

Fig. 3 is a diagram for assistance in explaining the centrifuge unit 207. The centrifuge unit 207 includes a centrifuging mechanism 303, an adapter handling mechanism 301, an adapter retaining unit 302, a sample handling mechanism 304, a centrifugation-queued sample retaining unit 306, and a centrifuged sample retaining unit 307.

Referring to Fig. 3, the adapter retaining unit 302 is constructed to accept, by way of example, eight adapters 305, four in a space for adapters queued for centrifugation, and four in a space for centrifuged adapters. The centrifuging mechanism 303 is configured to centrifuge a maximum of four adapters at the same time. The adapter handling mechanism 301 transfers each centrifugation-queued adapter 305 from the space for centrifugation-queued adapters to the centrifuging mechanism 303. The adapter handling mechanism 301 also transfers each centrifuged adapter 305 from the centrifuging mechanism 303 to the space for centrifuged adapters. In addition, one adapter 305 is constructed so that nine samples, for example, can be set up thereupon. The sample handling mechanism 304 undertakes transfer of samples from carriers in the centrifugation-queued sample retaining unit 306 to the adapters 305 on the adapter retaining unit 302, and transfer of samples from the adapters 305 on the adapter retaining unit 302 to carriers in the centrifuged sample retaining unit 307.

Next, a samples processing sequence in the centrifuge unit 207 is described below. A samples-loaded carrier that has been carried to the centrifuge unit 207 is further carried to the centrifugation-queued sample retaining unit 306 by the conveyance line 203. The sample handling mechanism 304 extracts the samples from the carrier in the sample retaining unit 306, and then the samples are transferred to the adapters 305 on the adapter retaining unit 302. The information that has been stored into the controller 201 in order to indicate which carrier is loaded with which samples is erased upon completion of the transfer. A historical record of which carrier has been loaded with which samples, however, is saved without being erased. The carrier from which the samples have been extracted is carried to the centrifuged sample retaining unit 307, whereby the carrier can then be loaded with other samples.

After that, samples that have been carried to the centrifuge unit 207 are likewise transferred to the adapters 305 on the adapter retaining unit 302. The transfer of the samples is repeated for a specified time or until four adapters 305 have become full of centrifugation-queued samples. Upon completion of the transfer, each adapter 305 is transferred to the centrifuging mechanism 303, in which, centrifugal separation is started.

After centrifugation, each sample becomes ready for carrier loading at the centrifuged sample retaining unit 307 via the adapter retaining unit 302.

In a conventional system, a carrier in a centrifuged sample retaining unit 307 has been loaded with carrier-loadable samples by a centrifuge unit 207 in the same order as that in which a sample handling mechanism 304 had extracted the samples from the carrier.

The carrier-loaded samples have been decapped in a decapping unit 208 and then carried to a dispensing unit 209.

In the present invention, however, order of carrier loading with samples is changed. The following describes a carrier-loading order changing sequence.

Registered in the controller 201 are analytical item registration information that denotes analysis items which the analyzers 211, 212, and 213 can execute, analyzability attribute information that denotes whether the analysis items can each be executed from one child sample, priority level information on samples, and analysis request information. The child sample is a sample that the dispensing unit 209 generates by dispensing a supplied sample. If the analyzability attribute information differs between analytical items, a plurality of child samples are generated.

The controller 201 also provides a screen menu shown in Fig. 1. This menu is for specifying a method of changing the carrier-loading order. The menu can be used to select whether the carrier-loading order is to be changed, and to select a corresponding carrier-loading order changing method in the case where the carrier-loading order is changed.

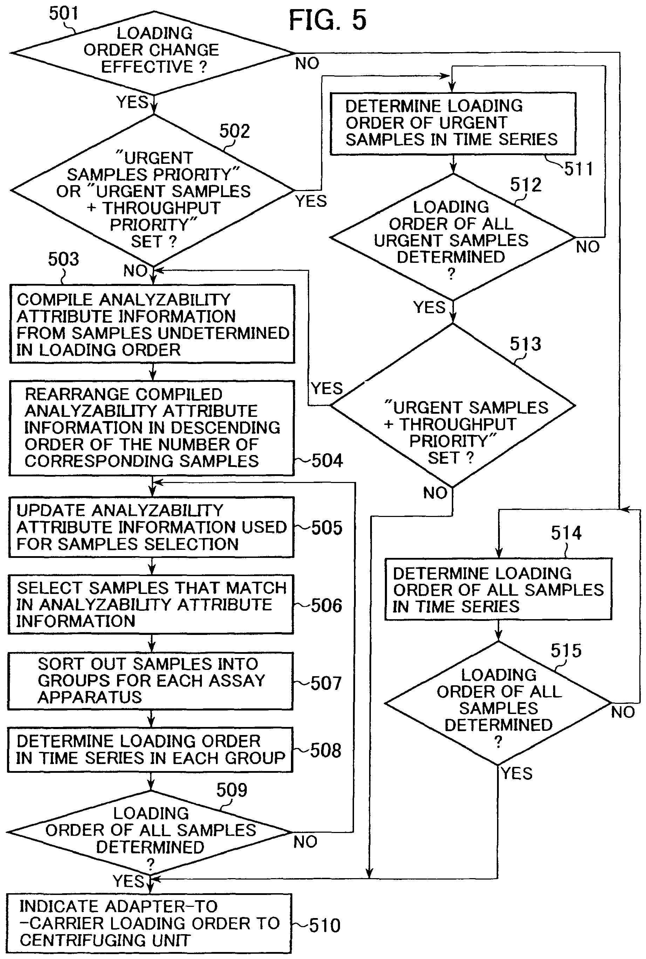

Data that is entered in the menu will be used during carrier-loading order determination based on a process flow of Fig. 5.

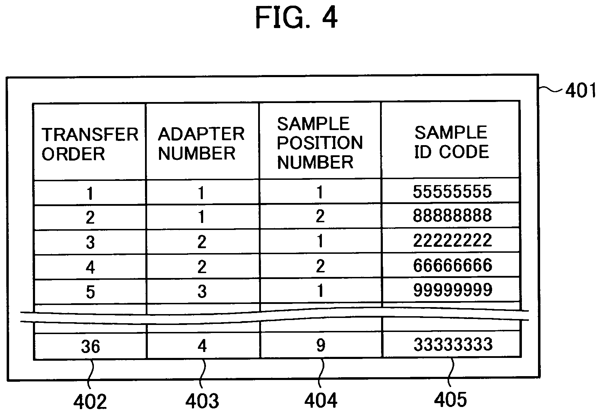

Each time a sample is transferred to one adapter 305 on the adapter retaining unit 302, which sample has been transferred to which adapter 305 is stored in time series into the centrifuge unit 207. Fig. 4 shows an example of creating the information stored into the centrifuge unit 207. This information is composed of information that denotes the order 402 in which the sample was transferred to the adapter 305, a logically assigned adapter number 403, a logically assigned sample-in-adapter position number 404, and a sample identification code 405. The information is reported to the controller 201 as sample-in-adapter information 401 when centrifugation is started.

Fig. 5 shows a process flow of steps in which the controller 201 determines the carrier-loading order. The determination is based upon the settings in the loading order setting menu 101 of Fig. 1 and the sample-in-adapter information 401 in Fig. 4, as well as upon the above-described analysis item registration information, analyzability attribute information, samples carrier-loading order information, and samples analysis request information.

First, presence/absence of a loading order change is determined in loading-order change existence determination step 501, and if the change is present and ineffective, loading order determination step 514 relating to all samples is executed in accordance with the order information 402, that is, in the order that the samples were transferred to the adapters 305.

If the change is effective, whether loading order of an urgent sample is to be preferentially set is determined in urgent-sample loading-order change existence determination step 502, and the determination is followed by loading-order determination step 511 for the urgent sample. In urgent-sample loading order determination step 511, the loading order of the urgent sample only is determined in accordance with the order information 402 denoting the order of transfer to an adapter 305.

Analyzability attribute information on samples whose carrier loading order has not been determined is viewed and how many analyzability attribute information patterns exist and how many samples corresponding to each pattern exist are compiled in analyzability attribute information compiling step 503. If the carrier loading order of the urgent sample has already been determined, this compiling step is executed only for non-urgent samples. If the carrier loading order of the urgent sample is undetermined, the compiling step is executed for all samples including the urgent sample.

Next, analyzability attribute information rearranging step 504 is executed to rearrange the obtained analyzability attribute information patterns in descending order of magnitude of the number of samples corresponding to the pattern. Analyzability attribute information updating step 505 for samples selection next follows to extract the patterns, one at a time, in order. In analyzability attribute information updating step 505, operational states of the analyzers connected via connection lines 210 may be considered during the extraction of each analyzability attribute information pattern.

In step 506 of selecting analyzability attribute information matching samples, samples with an analyzability attribute information pattern that matches the extracted pattern are selected. In order to complete the analyses corresponding to the samples analysis request information, the system executes samples grouping step 507 to sort out all selected samples into groups for each analyzer to which the sample is to be carried. The sorting is based on analysis item registration information.

In grouped-samples loading order determination step 508, loading order of the samples contained in the group is determined in accordance with the order information 402 denoting the order of transfer to the adapters 305.

If the loading order of all samples is not yet determined, the process returns from all-samples loading-order determination end checking step 509 to analyzability attribute information updating step 505, in which step, the analyzability attribute information pattern to be used for samples selection is then updated into the analyzability attribute information pattern that is next largest in the number of corresponding samples. Analyzability attribute information matching samples selection step 506 onward is repeated after that.

If the loading order of all samples is already determined, order of loading from adapters to a carrier is indicated to the centrifuge unit 207 in step 510 of indicating the adapter-to-carrier loading order to the centrifuge unit 207.

After this, upon completion of centrifugation, the samples are loaded onto the carrier in the centrifuged sample retaining unit 307 by the centrifuge unit 207 in the order specified from the controller 201. After the transfer of each sample to the carrier, the ID reading means reads the sample identification code assigned to the sample, and the carrier identification code assigned to the carrier. Thus, which carrier is loaded with which samples are registered in the controller 201 once again.

In this way, in the centrifuge unit 207 positioned at an upstream process site relative to the plurality of processing units included in the sample preprocessing system, the order for feeding out the samples from the centrifuge unit 207 upon completion of centrifugation is changed from the order in which the samples have been transferred into the centrifuge unit 207 prior to the centrifugation. Throughput of the processing units positioned at downstream process sites can therefore be prevented from decreasing.

In addition, since child samples that will be conveyed via the same path are continuously created in the dispensing unit 209, throughput of the analyzers connected via the connection lines 210 can also be prevented from decreasing.

Although this is not described in the present example, when carrier loading order of urgent samples is determined in urgent-sample loading order determination step 511 of Fig. 5, analyzability attribute information compiling step 503 to grouped-samples loading order determination step 508 may be executed only for the urgent samples, to make further changes to transfer order of the urgent samples.

### Description of Reference Numbers

101 Loading order setting menu
102 Loading order change setting button
103 Loading order change priority setting button
201 Controller
202 Communications cable
203 Conveyance line
204 Carrier supply unit
205 Loading unit
206 Tray
207 Centrifuge unit
208 Decapping unit
209 Dispensing unit
210 Connection line
211, 212, 213 Analyzers
301 Adapter handling mechanism
302 Adapter retaining unit
303 Centrifuging mechanism
304 Sample handling mechanism
305 Adapter
306 Centrifugation-queued sample retaining unit
307 Centrifuged sample retaining unit
401 Sample-in-adapter information
402 Order of transfer to adapter
403 Adapter number
404 Sample-in-adapter position number
405 Sample identification code
501 Step of determining whether loading order change exists
502 Step of determining whether urgent-samples loading order change exists
503 Step of compiling analyzability attribute information
504 Step of rearranging analyzability attribute information
505 Step of updating analyzability attribute information for sample selection
506 Step of selecting samples that match in analyzability attribute information
507 Step of grouping samples
508 Step of determining grouped-samples loading order
509, 515 Step of checking whether determination of loading order of all samples is completed
510 Step of indicating the adapter-to-carrier loading order to centrifuge unit
511 Step of determining urgent-sample loading order
512 Step of checking whether determination of loading order of all urgent samples is completed
513 Step of determining whether non-urgent samples loading order change exists
514 Step of determining all-samples loading order

## Claims

1. A sample preprocessing system comprising:
carriers each loaded with sample containers;
a conveyance line (203) for carrying each carrier;
a plurality of processing units (204, 205, 207, 208, 209) arranged along the conveyance line, including at least a centrifuge unit (207) for centrifuging the sample containers in a collective manner; and
a controller (201) for instructing the processing units to process the samples in addition to instructing the conveyance line to convey the carriers;
**characterised in that**:
it (302), and a sample handling mechanism (304) for transferring the sample containers from the carriers to adapters (305) on the adapter retaining unit (302) and from the adapters on the adapter retaining unit (302) to the carriers, and a centrifuging mechanism (303) for centrifuging the adapters, and **in that**
the controller (201) is programmed to change the order for feeding out the samples from the centrifuge unit after centrifugation, from the order of the transfer of the samples into the centrifuge unit, by changing the order of loading the carriers with the sample containers by the sample handling mechanism.

2. The sample preprocessing system according to claim 1, wherein:
the order of transfer of the samples from the centrifuge unit is changed using information on priority levels of the samples.

3. The sample preprocessing system according to claim 1, wherein:
the order of transfer of the samples from the centrifuge unit is changed using analysis item registration information that denotes analysis items on which analyzers (211, 212, 213) connected to the sample preprocessing system via connection lines (210) conduct analyses, analyzability attribute information that denotes whether the analysis items are each appropriate for analysis from one specific child sample, and analysis request information on each sample.

4. The sample preprocessing system according to claim 1, wherein the order of transfer of the samples from the centrifuge unit is changed using:
information on priority levels of the samples;
analysis request information;
analysis item registration information that denotes analysis items on which analyzers (211, 212, 213) connected to the sample preprocessing system via connection lines (210) conduct analyses; and
analyzability attribute information that denotes whether the analysis items are each appropriate for analysis from one specific child sample.

5. The sample preprocessing system according to claim 1, further comprising means (101) for setting a method of changing the order of transfer of the samples from the centrifuge unit.

6. The sample preprocessing system according to claim 1, wherein:
after a carrier from which samples were unloaded has been loaded with other samples, sample identification codes assigned to the other samples, and a carrier identification code assigned to the carrier are read and which carrier has been loaded with which of said other samples is registered once again.

7. The sample preprocessing system according to claim 6, wherein:
during transfer of the samples from one carrier to another, a historical record of which carrier has been loaded with the samples is saved.

## Patentansprüche

1. Probenvorverarbeitungssystem umfassend:
Träger, die jeweils mit Probenbehältern beladen sind;
eine Förderleitung (203) zum Tragen der jeweiligen Träger;
mehrere Verarbeitungseinheiten (204, 205, 207, 208, 209), die entlang der Förderleitung angeordnet sind und mindestens eine Zentrifugeneinheit (207) zum gemeinsamen Zentrifugieren der Probenbehälter enthalten; und
eine Steuerung (201), um die Verarbeitungseinheiten zum Verarbeiten der Proben sowie die Förderleitung zum Fördern der Träger anzuweisen,
**dadurch gekennzeichnet, dass**
die Zentrifugeneinheit (207) eine Adapteraufnahmeeinheit (302) und einen Probenhandhabungsmechanismus (304) zum Übertragen der Probenbehälter von den Trägern zu Adaptern (305) auf der Adapteraufnahmeeinheit (302) und von den Adaptern auf der Adapteraufnahmeeinheit (302) zu den Trägern sowie einen Zentrifugenmechanismus (303) zum Zentrifugieren der Adapter enthält und
die Steuerung (201) programmiert ist, die Reihenfolge zum Ausgeben der Proben aus der Zentrifugeneinheit nach dem Zentrifugieren gegenüber der Reihenfolge des Übertragens der Proben in die Zentrifugeneinheit durch Ändern der Reihenfolge des Beladens der Träger mit den Probenbehältern mittels des Probenhandhabungsmechanismus zu ändern.

2. Probenvorverarbeitungssystem nach Anspruch 1, wobei
die Reihenfolge des Übertragens der Proben aus der Zentrifugeneinheit unter Verwendung von Informationen über Prioritätsstufen der Proben geändert wird.

3. Probenvorverarbeitungssystem nach Anspruch 1, wobei
die Reihenfolge des Übertragens der Proben aus der Zentrifugeneinheit unter Verwendung von Analysegegenstands-Registrierungsinformationen, die Analysegegenstände angeben, über die mit dem Probenvorverarbeitungssystem über Verbindungsleitungen (210) verbundene Analysatoren (211, 212, 213) Analysen ausführen, Analysierbarkeitszusatzinformationen, die angeben, ob ausgehend von einer bestimmten Tochterprobe die Analysegegenstände jeweils als Analyse passend sind, und Analyseanforderungsinformationen über jede Probe geändert wird.

4. Probenvorverarbeitungssystem nach Anspruch 1, wobei die Reihenfolge des Übertragens der Proben aus der Zentrifugeneinheit unter Verwendung von Folgendem geändert wird:
Informationen über Prioritätsstufen der Proben;
Analyseanforderungsinformationen;
Analysegegenstands-Registrierungsinformationen, die Analysegegenstände bezeichnen, über die mit dem Probenvorverarbeitungssystem über Verbindungsleitungen (210) verbundene Analysatoren (211, 212, 213) Analysen ausführen; und
Analysierbarkeitszusatzinformationen, die angeben, ob ausgehend von einer bestimmten Tochterprobe die Analysegegenstände jeweils als Analyse passend sind.

5. Probenvorverarbeitungssystem nach Anspruch 1 mit einer Einrichtung (101) zum Festlegen eines Verfahrens zum Ändern der Reihenfolge des Übertragens der Proben aus der Zentrifugeneinheit.

6. Probenvorverarbeitungssystem nach Anspruch 1, wobei
nachdem ein Träger, von dem Proben abgeladen wurden, mit anderen Proben beladen wurde, den anderen Proben zugewiesene Probenidentifikationscodes und ein dem Träger zugewiesener Trägeridentifikationscode gelesen werden und erneut registriert wird, welcher Träger mit welchen der anderen Proben beladen wurde.

7. Probenvorverarbeitungssystem nach Anspruch 6, wobei:
während des Übertragens der Proben von einem Träger zu einem anderen eine Verlaufsaufzeichnung darüber gespeichert wird, welcher Träger mit den Proben beladen wurde.

## Revendications

1. Système de prétraitement d'échantillon comprenant :
des supports chargés chacun avec des contenants d'échantillons ;
une ligne de transport (203) pour transporter chaque support ;
une pluralité d'unités de traitement (204, 205, 207, 208, 209) disposées le long de la ligne de transport, comprenant au moins une unité de centrifugation (207) pour centrifuger les contenants d'échantillons de manière collective ; et
un dispositif de commande (201) pour ordonner aux unités de traitement de traiter les échantillons en plus d'ordonner à la ligne de transport de transporter les supports ;
**caractérisé en ce que** :
l'unité de centrifugation (207) comprend une unité de retenue d'adaptateurs (302), et un mécanisme de manipulation d'échantillons (304) pour transférer les contenants d'échantillons des supports aux adaptateurs (305) sur l'unité de retenue d'adaptateurs (302) et des adaptateurs sur l'unité de retenue d'adaptateurs (302) aux supports, et un mécanisme de centrifugation (303) pour centrifuger les adaptateurs, et **en ce que** le dispositif de commande (201) est programmé pour modifier l'ordre de sortie des échantillons de l'unité de centrifugation après centrifugation, de l'ordre du transfert des échantillons dans l'unité de centrifugation, en modifiant l'ordre de chargement des supports avec les contenants d'échantillons par le mécanisme de manipulation d'échantillons.

2. Système de prétraitement d'échantillons selon la revendication 1, dans lequel :
l'ordre de transfert des échantillons à partir de l'unité de centrifugation est modifié en utilisant des informations sur des niveaux de priorité des échantillons.

3. Système de prétraitement d'échantillons selon la revendication 1, dans lequel :
l'ordre de transfert des échantillons à partir de l'unité de centrifugation est modifié en utilisant des informations d'enregistrement d'élément d'analyse qui indiquent les éléments d'analyse selon lesquels des analyseurs (211, 212, 213) connectés au système de prétraitement d'échantillons via des lignes de connexion (210) effectuent des analyses, des informations d'attribut de capacité d'analyse qui indiquent si les éléments d'analyse sont chacun appropriés pour une analyse à partir d'un échantillon enfant spécifique, et des informations de demande d'analyse sur chaque échantillon.

4. Système de prétraitement d'échantillons selon la revendication 1, dans lequel l'ordre de transfert des échantillons à partir de l'unité de centrifugation est modifié en utilisant :
des informations sur les niveaux de priorité des échantillons ;
des informations de demandes d'analyse ;
des informations d'enregistrement d'élément d'analyse qui indiquent les éléments d'analyse selon lesquels des analyseurs (211, 212, 213) connectés au système de prétraitement d'échantillons via des lignes de connexion (210) effectuent des analyses ; et
des informations d'attribut de capacité d'analyse qui indiquent si les éléments d'analyse sont chacun appropriés pour une analyse à partir d'un échantillon enfant spécifique.

5. Système de prétraitement d'échantillons selon la revendication 1, comprenant en outre un moyen (101) pour établir un procédé de modification de l'ordre de transfert des échantillons à partir de l'unité de centrifugation.

6. Système de prétraitement d'échantillons selon la revendication 1, dans lequel :
après qu'un support duquel des échantillons ont été déchargés ait été chargé avec d'autres échantillons, les codes d'identification d'échantillon attribués aux autres échantillons, et un code d'identification de support attribué au support sont lus et le support qui a été chargé avec lesdits autres échantillons est de nouveau enregistré.

7. Système de prétraitement d'échantillons selon la revendication 6, dans lequel :
pendant le transfert des échantillons d'un support à un autre, un enregistrement historique du support qui a été chargé avec les échantillons est sauvegardé.
